Europäisches Patentamt

(19) European Patent Office

Office européen des brevets

(11) Numéro de publication: **0 300 023**
**B1**

(12) **FASCICULE DE BREVET EUROPEEN**

(45) Date de publication du fascicule du brevet: **04.07.90**

(51) Int. Cl.⁵: **F 16 L 37/08**

(21) Numéro de dépôt: **88901606.9**

(22) Date de dépôt: **02.02.88**

(86) Numéro de dépót international:
**PCT/FR88/00053**

(87) Numéro de publication internationale:
**WO 88/05882 11.08.88 Gazette 88/18**

(54) **RACCORD A ASSEMBLAGE RAPIDE.**

(30) Priorité: **03.02.87 FR 8701499**

(43) Date de publication de la demande:
**25.01.89 Bulletin 89/04**

(45) Mention de la délivrance du brevet:
**04.07.90 Bulletin 90/27**

(84) Etats contractants désignés:
**DE FR GB IT**

(56) Documents cités:
**FR-A-2 250 951**
**FR-A-2 263 449**
**US-A-2 619 367**
**US-A-4 063 760**
**US-A-4 193 616**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **RICHARD, Denis**
**62, rue Mirabeau**
**F-94600 Choisy-le-Roy (FR)**

(74) Mandataire: **Fabien, Henri et al**
**PEUGEOT SA. DAT / BPI 18, rue des Fauvelles**
**F-92250 La Garenne-Colombes (FR)**

## Description

L'invention a pour objet un raccord à assemblage rapide pour canalisations hydrauliques, comprenant un élément femelle solidaire d'un organe à raccorder et un élément mâle solidaire d'un tube à raccorder, comportant un joint torique d'étanchéité et un moyen de verrouillage.

Elle concerne un raccord de ce genre dont les deux éléments peuvent être assemblés par un robot, celui-ci n'ayant à effectuer qu'un mouvement de translation accompagné d'un effort pour assurer l'encliquetage et éventuellement d'un effort en sens inverse pour contrôler l'encliquetage.

On connait des raccords du genre défini cidessus, composés d'un élément mâle et d'un élément femelle, comportant des parties cylindriques propres au coulissement, des parties coniques et des épaulements propres à coopérer pour qu'un même déplacement axial engendre l'écrasement du joint et l'encliquetage du moyen de verrouillage.

Ces raccords sont en général prévus pour fonctionner en basse pression et ne peuvent pas convenir pour des pressions correspondant à une ou plusieurs centaines de bars.

Le brevet US—A—4063760 décrit un tel raccord, dont le tube à raccorder, en matière plastique est muni d'un insert interne et d'un manchon tubulaire externe conformé pour effectuer le raccordement avec l'élément femelle. Un tel raccord ne peut convenir que pour des pressions de l'ordre de quelques bars.

Le brevet US—A—2619367 décrit un raccord comportant plusieurs joints d'étanchéité, des moyens d'obturation internes et des moyens de verrouillage à ressort. Entre l'élément mâle du raccord et le tube flexible à raccorder, il est prévu un manchon et un écrou. Ce raccord qui comporte des élargissements de section et dont le filetage de l'écrou est soumis à la pression du fluide peut convenir pour des pressions moyennes, mais pas pour des pressions de plusieurs centaines de bars.

L'invention concerne donc un raccord hydraulique haute pression dont l'assemblage puisse s'effectuer en un seul mouvement de translation et qui soit entièrement démontable.

Un raccord hydraulique conforme à l'invention comprend un élément femelle solidaire d'un organe à raccorder et un élément mâle solidaire d'un tube à raccorder comportant un joint torique d'étanchéité et un moyen de verrouillage; l'élément mâle et l'élément femelle comportant des parties cylindriques propres au coulissement, des parties coniques et des épaulements propres à coopérer pour qu'un même déplacement engendre l'écrasement du joint d'étanchéité et l'encliquetage du moyen de verrouillage.

Il comporte des moyens de verrouillage démontables, composés d'un jonc élastique ou d'une épingle emprisonné (e) par des gorges et des portées toriques ou des perçages des éléments mâles et femelles, après l'intervention de la haute pression.

De préférence le joint torique est emprisonné entre trois surfaces, la première appartenant au tube à raccorder, la deuxième à l'élément femelle et la troisième à l'élément mâle, la surface libre du joint étant soumise en fonctionnement à la haute pression.

Trois premiers modes de réalisation s'appliquent au cas où les conduits à raccorder sont alignés. Un quatrième mode s'applique au cas où les conduits sont perpendiculaires.

Selon les trois premiers modes l'élément femelle comporte une partie conique propre à coopérer avec un épaulement de l'élément mâle pour engager le joint torique dans une partie cylindrique de l'élément femelle dont le diamètre est inférieur au diamètre nominal du joint torique.

De préférence en fonctionnement le joint torique est ecrasé à sa périphérie intérieure par le tube à raccorder, à sa périphérie extérieure par la partie cylindrique de l'élément femelle et poussé par la haute pression sur l'épaulement de l'élément mâle.

Selon le quatrième mode les moyens de verrouillage se composent d'une épingle comportant des parties droites disposées perpendiculairement l'une à l'autre et engagées dans des trous des éléments mâle et femelle.

On a décrit ci-après, à titre d'exemples non limitatifs, divers modes de réalisation selon l'invention, avec référence aux dessins annexés dans lesquels:

La Figure 1 représente en coupe axiale les deux éléments mâle et femelle du raccord, dans un premier mode de réalisation;

Les Figures 2 à 5 montrent l'assemblage des éléments du raccord de la Figure 1 à différentes étapes de cet assemblage;

Les Figures 6 à 9 sont des vues semblables aux Figures 2 à 5, d'un second mode de réalisation;

La Figure 10 est une vue semblable à la Figure 1 d'un troisième mode de réalisation;

La Figure 11 montre assemblé le raccord de la Figure 10;

La Figure 12 représente un quatrième mode de réalisation, en coupe suivant XII—XII de la Figure 13;

La Figure 13 en est une coupe transversale suivant XIII—XIII de la Figure 12.

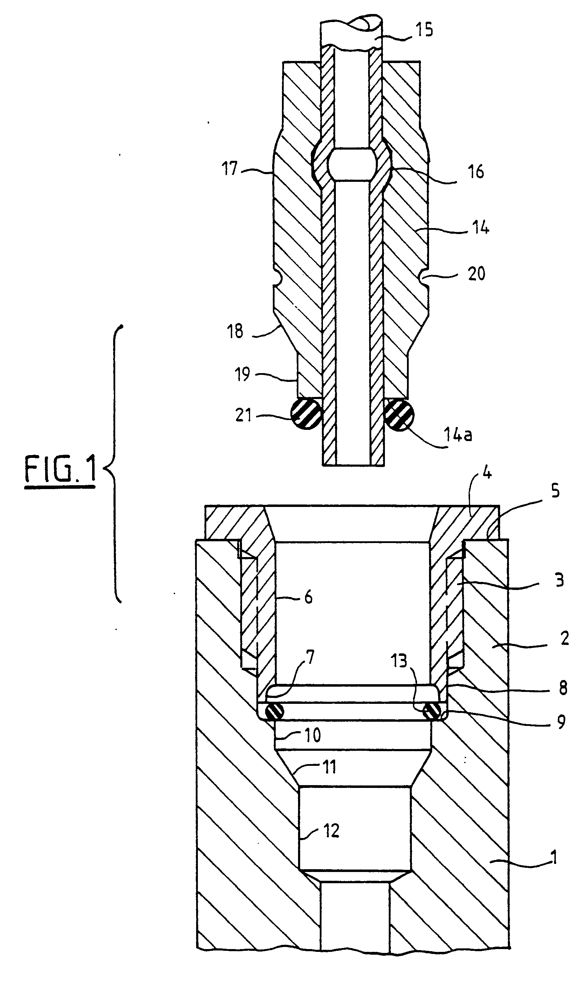

A la Figure 1 on voit le corps 1 d'un organe hydraulique; ce corps, qui constitue l'élément femelle du raccord et est obtenu par exemple par moulage, présente un bossage cylindrique 2 comportant un taraudage 3. Une vis creuse épaulée 4 dont la tête est en forme de vis à six pans, est bloquée sur la face d'extrémité 5 du bossage; cette vis présente un alésage cylindrique 6 qui comporte à son extrémité une gorge ou portée torique 7. De son côté, le corps 1 présente, au-delà du taraudage 3, un perçage cylindrique 8 relié par un épaulement 9 à une partie cylindrique 10 de même diamètre que l'alésage 6 et se raccordant elle-même par l'intermédiaire d'une partie tronconique 11 à une partie cylindrique 12.

Avant la mise en place de la vis 4 dans le taraudage 3, un jonc élastique fendu 13 dont le diamètre nominal est égal au diamètre de la gorge torique 7, a été introduit dans le corps. Ce jonc est venu reposer sur l'épaulement 9.

Une douille 14 qui constitue l'élément mâle du raccord est fixée à un tube 15 réalisé par exemple par une double paroi de feuillard d'acier. Cette fixation peut être assurée par un renflement 16 effectué à l'aide d'une matrice en deux parties et d'un poinçon de refoulement; après mise en place de la douille 14 sur le tube 15, la douille a été rétreinte derrière le renflement du tube, par exemple par sertissage ou magnétostriction.

La douille 14 présente une portée cylindrique 17 de même diamètre que l'alésage 6 de la vis 4 et peut ainsi coulisser dans cet alésage.

Cette portée 17 est prolongée par une portée tronconique 18 et une portée cylindrique 19 dont les formes sont complémentaires respectivement des parties 11 et 12 du corps 1. La portée 17 présente une gorge torique 20 dont le diamètre est égal au diamètre du jonc 13. Un joint torique 21 est glissé sur le bord du tube 15 en butée contre la face d'extrémité 14a de la douille 14 et se tient en place par son serrage propre.

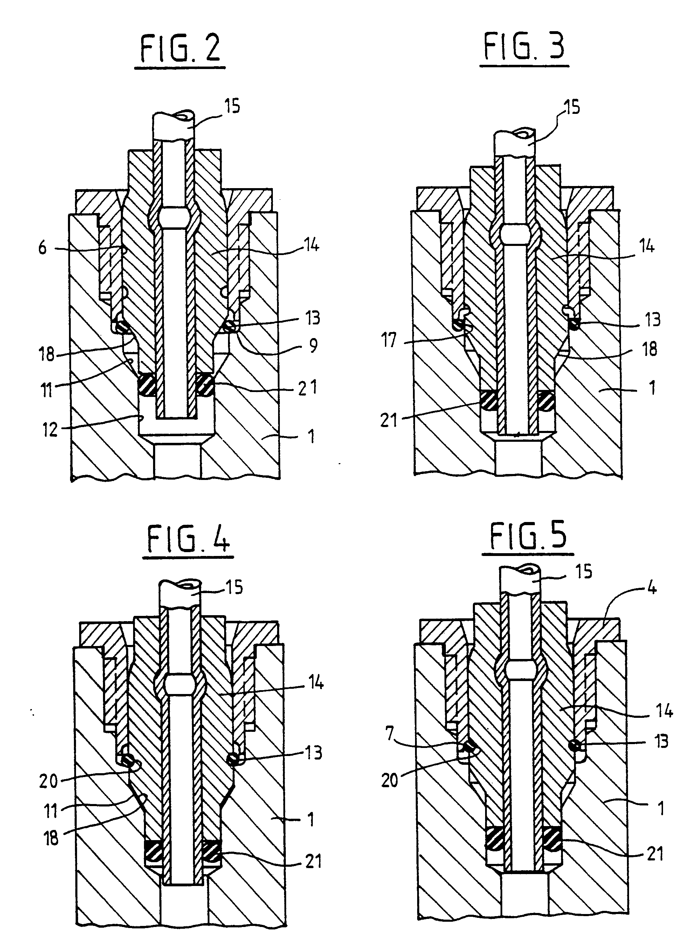

Pour assembler le raccord, on introduit dans l'alésage 6 le tube 15 avec sa douille 14 et son joint 21; l'ensemble coulisse jusqu'à ce que le joint 21 vienne au contact de la partie tronconique 11 du corps 1. On exerce alors un léger effort sur la douille 14 de façon à comprimer le joint 21 et à le faire passer dans l'alésage 12 (Figure 2). Le jonc 13 vient alors au contact de la portée tronconique 18 de la douille.

On exerce ensuite sur la douille un effort un peu plus important de façon que la portée tronconique 18 assure une expansion du jonc 13 et le fasse passer sur la portée cylindrique 17 (Figure 3). On continue de pousser jusqu'au moment où le jonc 13 s'engage dans la gorge 20 (Figure 4). En même temps, la portée tronconique 18 de la douille vient en butée contre la partie tronconique 11 du corps 1. L'effort de montage peut croître, mais il n'y a aucun risque de détérioration.

On notera que le joint d'étanchéité est emprisonné entre trois surfaces appartenant respectivement au diamètre extérieur du tube 15, à la douille 14 (épaulement 14a) et à l'alésage 12, la surface libre du joint étant soumise à la haute pression.

On peut ensuite exercer un effort en sens inverse de façon à placer les éléments dans la position de la Figure 5; le jonc 13 prisonnier dans la gorge 20 vient buter contre la gorge 7 et empêche la sortie de la douille 14. Cette mise en position n'est pas obligatoire car elle se fera automatiquement lors de la première mise en pression.

Si, par la suite, on désire séparer l'un de l'autre les deux éléments du raccord, il suffit de dévisser la vis creuse 4.

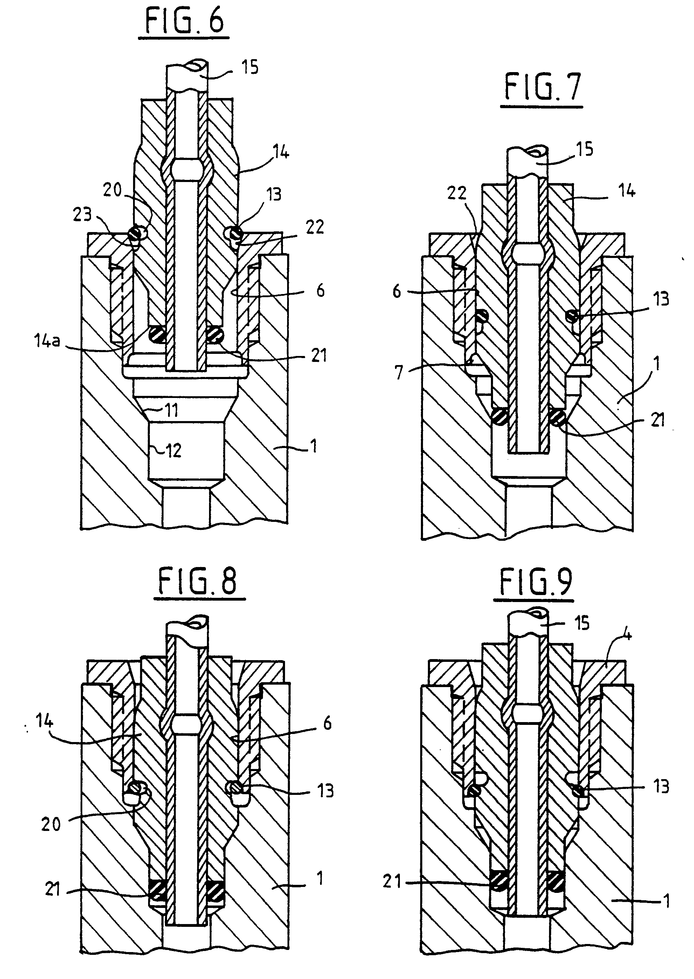

Dans la variante des Figures 6 à 9, alésage 6 de la vis 4 débouche à l'extérieur par une portée conique 22 et la douille 14 présente une portée torique 23 en dessous (ou en aval dans le sens de l'enfoncement du raccord) de la gorge 20. Le jonc fendu 13, au lieu d'être placé dans le corps 1 est initialement posé sur cette portée.

Lorsqu'on emmanche la douille 14 dans le corps 1, le jonc 13 vient au contact de la portée conique 22 et se rétreint en s'engageant dans la gorge 20 (Figure 6).

Puis le joint 21 se comprime et se met en place dans la partie cylindrique 12 du corps 1 (Figure 7). Le jonc 13 rencontre alors la gorge 7 de la vis creuse 4 et s'y loge en se dégageant de la gorge 20 et reprenant son diamètre initial (Figure 8). Par retour en arrière, le jonc devient prisonnier (Figure 9) entre la partie torique 23 de la douille 14 et la gorge ou portée torique 7.

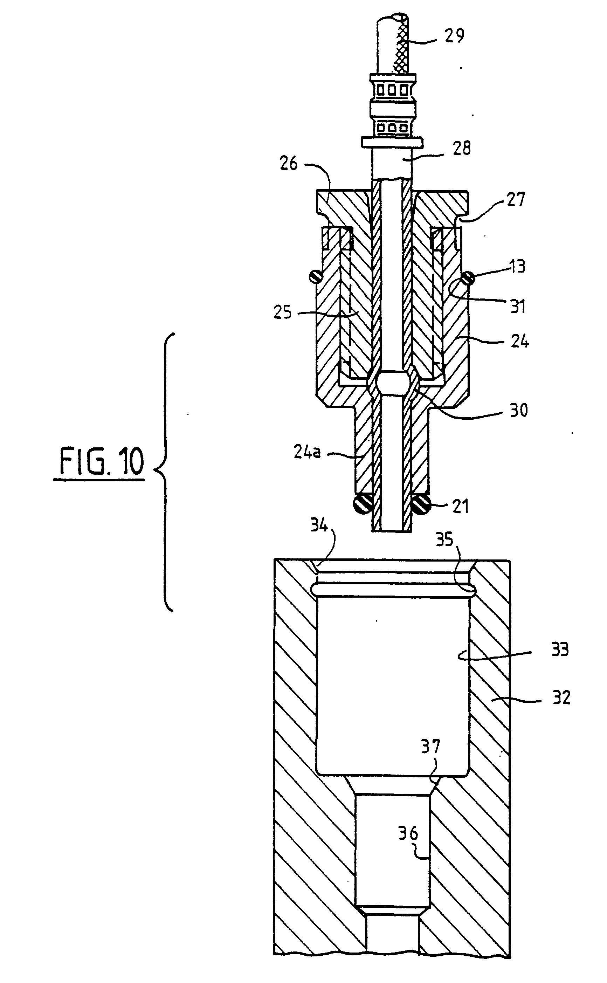

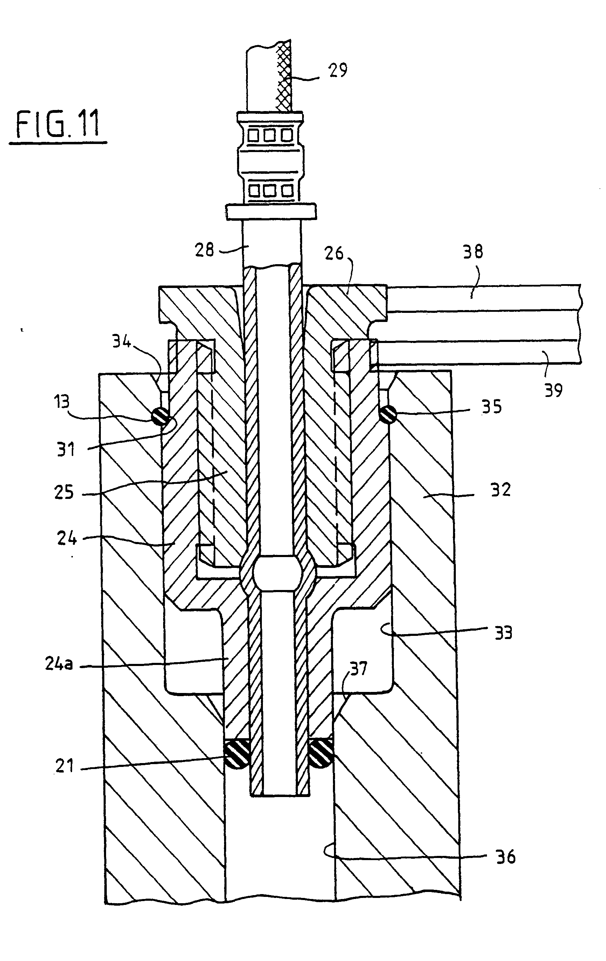

Dans le mode de réalisation des Figures 10 et 11, le raccord comprend un élément mâle 24 dont l'extrémité 24a est de diamètre réduit et dans lequel est vissée une vis creuse 25 dont la tête est élargie comme indiqué en 26 en formant un épaulement 27. Cette vis est traversée par l'embout 28 d'un flexible 29 qui y est emprisonné sans jeu par un renflement 30 de l'embout. Le jonc fendu 13 repose sur un épaulement ou une portée torique 31 de l'élément 24 et le joint 21 est disposé en bout de cet élément autour de l'embout 28.

L'élément femelle 32 du raccord présente un alésage 33 dont le diamètre est égal au diamètre extérieur de l'embout et qui débouche à l'extérieur par un chanfrein 34; cet alésage comporte une gorge torique 35 à une faible distance de ce chanfrein. L'alésage 33 est prolongé par un alésage 36 auquel il est relié par un chanfrein 37 et dont le diamètre est égal à celui de l'extrémité 24a de l'embout 24.

L'assemblage des éléments mâle et femelle du raccord se fait de la même manière que pour les modes de réalisation précédemment décrits. Le joint 21 est comprimé par le chanfrein 37 et s'engage dans l'alésage 36. Puis le jonc élastique 13 poussé par l'épaulement 27 est rétreint par le chanfrein 34 et s'engage dans la gorge 35. Ensuite, par un effort en sens inverse ou à la première mise en pression, le tube 29 et son embout 28 reculent et la gorge 31 de l'élément 24 vient se plaquer sur le jonc 13 qui devient prisonnier (Figure 11).

Pour séparer les éléments du raccord, on dévisse la vis creuse 25 à l'aide des clefs 38 et 39. On sort le tube avec la vis creuse et on pousse l'embout 24 dans l'élément 32 jusqu'à ce qu'il soit en butée contre le fond de l'alésage 33 de cet élément. Le jonc 13 se trouve alors dégagé et on peut le retirer.

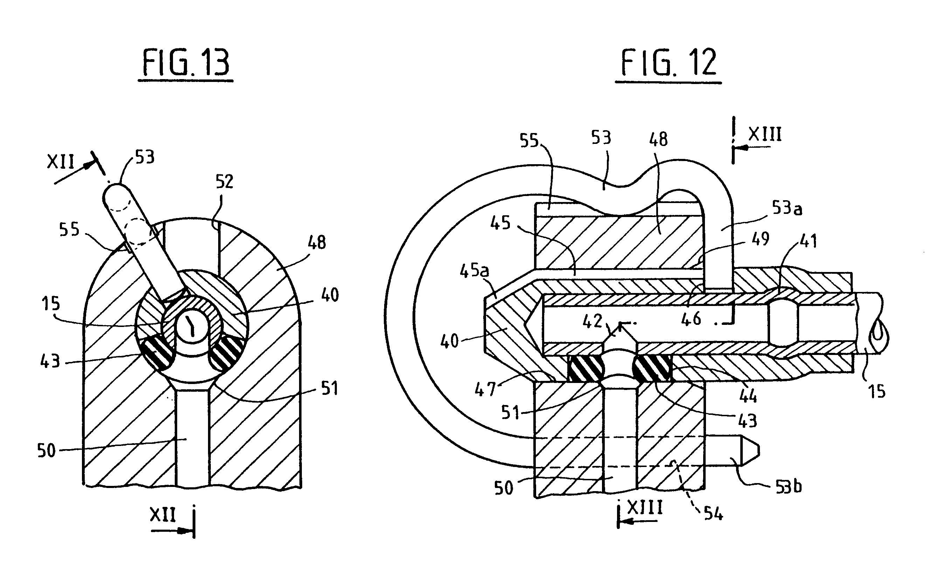

Dans les modes de réalisation précédents les conduits à raccorder sont alignés. Le mode de réalisation des Figures 12 et 13 s'applique au raccordement de conduits perpendiculaires.

Dans ce cas, le tube 15 est emmanché dans une douille borgne 40 et solidarisé avec cette douille par un renflement 41, la douille ayant été rétreinte sur le tube derrière le renflement, par exemple par sertissage ou magnétostriction. Le tube 15 comporte un trou radial 42 situé en regard d'un joint annulaire 43 disposé dans un trou 44 de la douille.

L'extrémité de la douille 40 est tronconique et cette dernière présente extérieurement une rainure 45 qui se termine à l'une de ses extrémités par un trou 46 et, à son autre extrémité, sur la extrémité tronconique de la douille comme indiqué en 45a.

Le tube 15 avec la douille 40 est monté dans un alésage 47 d'un bossage 48 d'un organe à raccorder au tube 15, cet alésage présentant un embrèvement 49 à son ouverture. Ce bossage présente un trou de passage de liquide 50 muni d'un chanfrein 51 et débouchant dans l'alésage 47. La référence 52 désigne un trou opposé diamétralement au passage 50, de plus grand diamètre que lui et ayant servi à la réalisation du chanfrein 51.

Le tube peut être fixé au bossage par une épingle 53 dont les extrémités 53a et 53b sont orientées perpendiculairement l'une à l'autre et engagées respectivement dans le trou 46 de la douille 40 et dans un trou 54 du bossage 48. Celui-ci est muni extérieurement d'une rainure de guidage 55 dans laquelle est engagée l'épingle 53.

Pour fixer le tube 15 au bossage 48, on met en place l'épingle 53 dans le bossage et on introduit le tube dans l'embrèvement 49 en engageant la pointe de l'épingle dans la partie en pente 45a de la rainure 45. Puis on pousse sur le tube jusqu'au contact du joint 43 avec l'embrèvement 49. En augmentant l'effort, le joint pénètre dans l'alésage 47 et vient se placer sur le chanfrein 51 du passage 50. En fin d'emboîtement, la pointe 53a de l'épingle 53 s'engage dans le trou 46 et l'ensemble est verrouillé.

Le joint d'étanchéité 43 est emprisonné entre trois surfaces appartenant respectivement au diamètre extérieur du tube 15 (autour du trou 42), à la douille 40 (trou 44) et à l'alésage 47, la surface libre du joint étant soumise à la haute pression.

Ce mode de réalisation présente l'avantage que l'ensemble tube/douille n'est pas soumis à un effort de déboîtement.

**Revendications**

1. Raccord hydraulique haute pression à fixation rapide comprenant un élément femelle (1, 32, 48) solidaire d'un organe à raccorder et un élément mâle (14, 24, 40) solidaire d'un tube à raccorder (15), comportant un joint torique d'étanchéité (21, 43) et un moyen de verrouillage (13, 53); l'élément mâle et l'élément femelle comportant des parties cylindriques propres au coulissement, des parties coniques et des épaulements propres à coopérer pour qu'un même déplacement engendre l'écrasement du joint d'étanchéité et l'encliquetage du moyen de verrouillage; le moyen de verrouillage étant démontable et composé d'un jonc élastique (13) ou d'une épingle (53) emprisonné(e) après l'intervention de la haute pression par des gorges (20, 35) et des portées toriqués (7, 23, 31) ou des perçages (46, 54) des éléments mâles et femelles; les moyens d'étanchéité étant composés d'un joint torique (21, 43) emprisonné entre trois surfaces, la première appartenant au tube à raccorder, la deuxième à l'élément femelle et la troisième à l'élément mâle, la surface libre du joint étant soumise en fonctionnement à la haute pression.

2. Raccord selon la revendication 1, caractérisé en ce que l'élément femelle (1, 32) comporte une partie conique (11, 37) propre à coopérer avec un épaulement (14a) de l'élément mâle (14, 24) pour engager le joint torique (21) dans une partie cylindrique (12, 36) de l'élément femelle (1, 32) dont le diamètre est inférieur au diamètre nominal du joint torique (21).

3. Raccord selon la revendication 2, caractérisé en ce qu'en fonctionnement le joint torique (21) est ecrasé à sa périphérie intérieure par le tube (15, 28) à raccorder, à sa périphérie extérieure par la partie cylindrique (12, 36) de l'élément femelle et poussé par la haute pression sur l'épaulement (14a) de l'élément mâle.

4. Raccord selon la revendication 3, caractérisé en ce que l'élément mâle (14) comporte une gorge (20) dans laquelle le jonc (13) est à son diamètre nominal.

5. Raccord selon la revendication 4, caractérisé en ce que l'élément mâle (14) comporte, entre sa gorge (20) et son extrémité (19), une partie conique (18) propre à coopérer avec un épaulement (9) de la partie femelle (1) pour expandre le jonc (13) sur le diamètre extérieur cylindrique de la partie mâle.

6. Raccord selon la revendication 5, caractérisé en ce que la partie conique (11) de l'élément femelle (1) sert de butée d'enfoncement pour la partie conique (18) de l'élément mâle.

7. Raccord selon la revendication 6, caractérisé en ce qu'en fonctionnement l'élément mâle est poussé par la haute pression sur une position où le jonc est emprisonné sur la gorge torique (20) de l'élément mâle (14) et une portée torique (7) de l'élément femelle.

8. Raccord selon la revendication 7, caractérisé en ce que la portée torique (7) de l'élément femelle est taillée en extrémité d'une vis creuse épaulée (4) dont l'alésage axial est au diamètre de la partie mâle.

9. Raccord selon la revendication 3, caractérisé en ce que l'élément mâle (14) comporte une gorge (20) propre à coopérer avec une partie conique (22) de l'élément femelle pour comprimer le jonc (13) au diamètre des parties cylindriques coulissantes.

10. Raccord selon la revendication 9, caractérisé en ce que l'élément mâle comporte en aval de la gorge (20) une portée torique (23) sur laquelle le jonc est à son diamètre nominal.

11. Raccord selon la revendication 10, caractérisé en ce que l'élément femelle comporte une vis creuse épaulée (4) dont l'alésage axial est au diamètre de la partie mâle, munie en extrémité d'une portée torique (7) propre à coopérer avec la gorge (20) de l'élément mâle pour maintenir le jonc (13) en position de verrouillage.

12. Raccord selon la revendication 11, caractérisé en ce que la partie conique (11) de l'élément femelle (1) sert de butée d'enfoncement pour la partie conique (18) de l'élément mâle.

13. Raccord selon la revendication 3, caractérisé en ce que l'élément femelle (32) comporte une partie conique (34) propre à coopérer avec un épaulement (27) de l'élément mâle (24) pour comprimer le jonc (13) et l'encliqueter sur une gorge (35) de l'élément femelle (32).

14. Raccord selon la revendication 1, caractérisé en ce que l'élément femelle (48) comporte une partie conique (49) propre à comprimer le joint torique (43) dans un logement (44) de l'élément mâle (40) au diamètre des parties cylindriques coulissantes.

15. Raccord selon la revendication 14, caractérisé en ce que l'épingle (53) comporte en position de verrouillage des parties droites (53a, 53b) disposées perpendiculairement l'une à l'autre et engagées dans des trous (46, 54) des éléments mâle (40) et femelle (48).

16. Raccord selon la revendication 15, caractérisé en ce que l'élément femelle (48) comporte une rainure (55) de maintien et de guidage de l'épingle (53).

17. Raccord selon la revendication 16, caractérisé en ce que l'élément mâle (40) comporte une partie conique (45a) propre à expandre l'épingle (53), une rainure (45) propre à la guider et un logement (46) propre à recevoir l'extrémité (53a) de l'épingle (53) en position verrouillée.

**Patentansprüche**

1. Hydraulische Hochdruck-Schnellbefestigungskupplung mit einem weiblichen Element (1, 32, 48), das mit einem Kupplungsorgan verbunden ist, und einem männlichen Element (14, 24, 40), das mit einem Kupplungsrohr (15) verbunden ist, das ein torisches Dichtungsteil (21, 43) und eine Verriegelungseinrichtung (13, 53) aufweist; wobei das männliche Element und das weibliche Element zylindrische Bereiche, die geeignet sind für ein Gleiten, konische Bereiche und Schultern aufweisen, die geeignet sind, zusammenzuwirken, damit eine gleiche Bewegung das Zusammendrücken des Dichtungsteils und das Einklinken der Verriegelungseinrichtung erzeugt; wobei die Verriegelungseinrichtung entfernbar und aus einem elastischen Sprengring (13) oder aus einer Nadel (53) gebildet ist, die nach Einwirken des hohen Drucks durch Kerben (20, 35) und torische Eingänge (7, 23, 31) oder Druchbrüchen (46, 54) der männlichen und weiblichen Elemente eingesperrt ist; wobei die Dichtungseinrichtungen aus einer torischen Dichtung (21, 43) gebildet sind, die zwischen drei Flächen eingesperrt ist, wobei die erste zu dem Kupplungsrohr, die zweite zum weiblichen Element und die dritte zum männlichen Element gehört, wobei die Freifläche der Dichtung im Betrieb dem hohen Druck ausgesetzt ist.

2. Kupplung nach Anspruch 1, dadurch gekennzeichnet, daß das weibliche Element (1, 32) einen konischen Bereich (11, 37) aufweist, der geeignet ist, mit einer Schulter (14a) des männlichen Elements (14, 24) zusammenzuwirken, um in die torische Dichtung (21) in einem zylindrischen Bereich (12, 36) des weiblichen Elements (1, 32) einzugreifen, deren Durchmesser kleiner ist als der nominale Durchmesser der torischen Dichtung (21).

3. Kupplung nach Anspruch 2, dadurch gekennzeichnet, daß im Betrieb die torische Dichtung (21) an ihrem inneren Umfang durch das Kupplungsrohr (15, 28), an seinem Außenumfang durch den zylindrischen Bereich (12, 36) des weiblichen Elements zusammengedrückt ist und durch den hohen Druck auf die Schulter (14a) des männlichen Elements gedrückt wird.

4. Kupplung nach Anspruch 3, dadurch gekennzeichnet, daß das männliche Element (14) eine Kerbe (20) aufweist, in der der Sprengring (13) seinen nominalen Durchmesser aufweist.

5. Kupplung nach Anspruch 4, dadurch gekennzeichnet, daß das männliche Element (14) zwischen seiner Kerbe (20) und seinem Ende (19) einen konischen Bereich (18) aufweist, der geeignet ist, mit einer Schulter (9) des weiblichen Bereichs (1) zusammenzuwirken, um den Sprengring (13) auf den zylindrischen Außendurchmesser des männlichen Bereichs zu dehnen.

6. Kupplung nach Anspruch 5, dadurch gekennzeichnet, daß der konische Bereich (11) des weiblichen Elements (1) als Eindringanschlag für den konischen Bereich (18) des männlichen Elements dient.

7. Kupplung nach Anspruch 6, dadurch gekennzeichnet, daß im Betrieb das männliche Element durch den hohen Druck auf eine Stellung gedrückt wird, wo der Sprengring auf der torischen Kerbe (20) des männlichen Elements (14) und einer torischen Auflagefläche (7) des weiblichen Elementes eingeklemmt ist.

8. Kupplung nach Anspruch 7, dadurch gekennzeichnet, daß die torische Auflagefläche (7) des weiblichen Elements am Ende einer hohlen, mit Absätzen versehenen Schraube (4) geschnitten ist, deren axiale Öffnung am Durchmesser des männlichen Teils ist.

9. Kupplung nach Anspruch 3, dadurch gekennzeichnet, daß das männliche Element (14) eine Kerbe (20) aufweist, die geeignet ist, mit einem konischen Bereich (22) des weiblichen Elements zusammenzuwirken, um den Sprengring (13) auf den Durchmesser der gleitenden zylindrischen Bereiche zu komprimieren.

10. Kupplung nach Anspruch 9, dadurch gekennzeichnet, daß das männliche Element unterhalb der Kerbe (20) eine torische Auflagefläche (23) aufweist, auf der der Sprengring seinen nominalen Durchmesser aufweist.

11. Kupplung nach Anspruch 10, dadurch gekennzeichnet, daß das weibliche Element eine mit Ansätzen versehene hohle Schraube (4) aufweist, deren axiale Öffnung gleich dem Durchmesser des männlichen Bereichs ist, deren Ende mit einer torischen Auflagefläche (7) versehen ist, die geeignet ist, mit der Kerbe (20) des männlichen Elements zusammenzuwirken, um den Sprengring (13) in Verriegelungsstellung zu halten.

12. Kupplung nach Anspruch 11, dadurch gekennzeichnet, daß der konische Bereich (11) des weiblichen Elements (1) als Eindringanschlag für den konischen Bereich (18) des männlichen Elements dient.

13. Kupplung nach Anspruch 3, dadurch gekennzeichnet, daß das weibliche Element (32) einen konischen Bereich (34) aufweist, der geeignet ist, mit einer Schulter (27) des männlichen Elements (24) zusammenzuwirken, um den Sprengring (13) zu komprimieren und ihn auf eine Kerbe (35) des weiblichen Elements (32) einzuklinken.

14. Kupplung nach Anspruch 1, dadurch gekennzeichnet, daß das weibliche Element (48) einen konischen Bereich (49) aufweist, der geeignet ist, die torische Dichtung (43) in eine Aufnahme (44) des männlichen Elements (40) auf einen Durchmesser der gleitenden zylindrischen Bereiche zu komprimieren.

15. Kupplung nach Anspruch 14, dadurch gekennzeichnet, daß die Nadel (53) in Verriegelungsstellung gerade Bereiche (53a, 53b) aufweist, die senkrecht zueinander angeordnet und in Löcher (46, 54) der männlichen (40) und weiblichen (48) Elemente eingreifen.

16. Kupplung nach Anspruch 15, dadurch gekennzeichnet, daß das weibliche Element (48) eine Halte- und Führungsvertiefung (55) der Nadel (53) aufweist.

17. Kupplung nach Anspruch 16, dadurch gekennzeichnet, daß das männliche Element (40) einen konischen Bereich (45a), der geeignet ist, die Nadel (53) zu dehnen, eine Kerbe (45), die geeignet ist, sie zu führen, und eine Aufnahme (46) aufweist, die geeignet ist das Ende (53a) der Nadel (53) in Verriegelungsstellung aufzunehmen.

**Claims**

1. High-pressure hydraulic connector for rapid fixing comprising a female element (1, 32, 48) integral with a member to be connected, and a male element (14, 24, 40) integral with a tube to be connected (15), comprising a toroidal sealing gasket (21, 43) and a locking means (13, 53), the male element and the female element comprising cylindrical parts suitable for sliding, conical parts and shoulders suitable to co-operate so that one and the same displacement causes compression of the sealing gasket and the engagement of the locking means, the locking means being removable and comprising an elastic ring (13) or a pin (53) confined after the action of high pressure by grooves (20, 35) and toroidal journals (7, 23, 31) or borings (46, 54) of the male and female elements, the sealing means comprising a toroidal gasket (21, 43) confined between three surfaces, the first appertaining to the tube to be connected, the second to the female element and the third to the male element, the free surface of the gasket being subjected to the high pressure during operation.

2. Connector according to claim 1, characterized in that the female element (1, 32) comprises a conical part (11, 37) suitable to co-operate with a shoulder (14a) of the male element (14, 24) to engage the toroidal gasket (21) in a cylindrical part (12, 36) of the female element (1, 32), the diameter of which is smaller than the nominal diameter of the toroidal gasket (21).

3. Connector according to claim 2, characterized in that, during operation, the toroidal gasket (21) is squashed at its internal periphery by the tube (15, 28) to be connected at its outer periphery by the cylindrical part (12, 36) of the female element and pushed by the high pressure against the shoulder (14a) of the male element.

4. Connector according to claim 3, characterized in that the male element (14) comprises a groove (20) in which the ring (13) is at its nominal diameter.

5. Connector according to claim 4, characterized in that the male element (14) is provided between its groove (20) and its end (19), with a conical part (18) suitable to co-operate with a shoulder (9) of the female element (1) to expand the ring (13) on to the outer cylindrical diameter of the male element.

6. Connector according to claim 5, characterized in that the conical part (11) of the female element (1) acts as an insertion stop for the conical part (18) of the male element.

7. Connector according to claim 6, characterized in that, during operation, the male element is pushed by the high pressure to a position where the ring is confined by the toroidal groove (20) of the male element (14) and a toroidal journal (7) of the female element.

8. Connector according to claim 7, characterized in that the toroidal journal (7) of the female element is cut at the end of a hollow shouldered screw (4), the axial bore of which has the diameter of the male element.

9. Connector according to claim 3, characterized in that the male element (14) comprises a groove (20) suitable to co-operate with a conical part (22) of the female element to compress the ring (13) to the diameter of the sliding cylindrical parts.

10. Connector according to claim 9, characterized in that the male element is provided downstream of the groove (20) with a toroidal journal (23) on which the ring is at its nominal diameter.

11. Connector according to claim 10, characterized in that the female element comprises a hollow shouldered screw (4), the axial bore of which has the diameter of the male element, provided at the end with a toroidal journal (7) suitable to co-operate with the groove (20) of the male element to keep the ring (13) in the locking position.

12. Connector according to claim 11, characterized in that the conical part (11) of the female element (1) acts as an insertion stop for the conical part (18) of the male element.

13. Connector according to claim 3, characterized in that the female element (32) comprises a conical part (34) suitable to co-operate with a shoulder (27) of the male element (24) to compress the ring (13) and engage it in a groove (35) of the female element (32).

14. Connector according to claim 1, characterized in that the female element (48) comprises a conical part (49) suitable to compress the toroidal gasket (43) within a seat (44) of the male element (40) to the diameter of the sliding cylindrical parts.

15. Connector according to claim 14, characterized in that the pin (53) is provided in the locking position with straight parts (53a, 53b) arranged at right angles to one another and engaged in holes (46, 54) of the male (40) and female (48) elements.

16. Connector according to claim 15, characterized in that the female element (48) comprises a groove (55) for securing and guiding the pin (53).

17. Connector according to claim 16, characterized in that the male element (40) comprises a conical part (45a) suitable to expand the pin (53), a groove (45) suitable to guide the same and a seat (46) suitable to receive the end (53a) of the pin (53) in the locking position.

FIG.1

## FIG. 2

## FIG. 3

## FIG. 4

## FIG. 5

## FIG. 6

## FIG. 7

## FIG.8

## FIG.9

FIG. 10

FIG.11

FIG. 12

FIG.13